# EUROPÄISCHE PATENTSCHRIFT

(11) **EP 2 657 302 B1**
(45) Veröffentlichungstag und Bekanntmachung des Hinweises auf die Patenterteilung: **19.02.2020**
(21) Anmeldenummer: 13165487.3
(22) Anmeldetag: 26.04.2013
(51) Int. Cl.: C08L 95/00, C04B 26/26, C08K 3/40, E04C 2/16, E04C 2/24, C04B 20/10, C04B 30/00, C08K 7/28

(54) **Schaumglasprodukt für Baukonstruktionen und Herstellungsverfahren**
Foam glass product for building structures and method of manufacture
Produit en verre cellulaire pour des constructions et procédé de fabrication

(30) Priorität: 27.04.2012 CH 5832012
(43) Veröffentlichungstag der Anmeldung: 30.10.2013
(73) Patentinhaber: O. Aeschlimann AG, 4800 Zofingen (CH)
(72) Erfinder: Martin, Andreas, 4148 Pfeffingen (CH); Andres, Kurt, 6030 Ebikon (CH); Schmid, Albert, 4917 Melchnau (CH)
(74) Vertreter: Braun, André jr.

(56) Entgegenhaltungen:
- CH-A5- 681 162
- DE-A1- 1 496 669
- DE-A1- 2 630 459
- DE-A1- 19 815 756
- JP-A- 2000 334 412
- US-A- 2 626 864
- US-A- 3 373 074
- Anonymous: "Hot Mix Asphalt Plants; Emission Assessment Report", , 1. Dezember 2000 (2000-12-01), Seiten 1-46, XP055044090, North Carolina, USA Gefunden im Internet: URL:http://www.epa.gov/ttnchie1/ap42/ch11/ related/ea-report.pdf [gefunden am 2012-11-13]
- Annonymous: "FOAMGLAS Wärmedämmung unter Gussasphaltestrichen", , 24. Februar 2012 (2012-02-24), Seiten 1-8, XP055075151, Gefunden im Internet: URL:http://www.foamglas.de/__/frontend/han dler/document.php?id=2027&type=42 [gefunden am 2013-08-14]
- Annonymous: "Perlite Volcanic Glass as a Hollow Microsphere Filler", , 25. Oktober 2006 (2006-10-25), Seiten 1-2, XP055075166, Gefunden im Internet: URL:http://www.perlite.org/library-perlite -info/industrial-perlite/Perlite_Microsphe re-Filler.pdf [gefunden am 2013-08-14]
- Arjen Christian Steiner: "Foam glass production from vitrified municipal waste fly ashes; Thesis", , 28. August 2006 (2006-08-28), Seiten 1-223, XP055075170, Eindhoven, The Netherlands ISBN: 978-9-03-862748-9 Gefunden im Internet: URL:http://alexandria.tue.nl/extra2/200611 231.pdf [gefunden am 2013-08-14]
- Annonymous: "Foamit Foam Glass, brochure", , 29. März 2012 (2012-03-29), Seiten 1-8, XP055075176, Gefunden im Internet: URL:http://www.foamit.fi/DowebEasyCMS/Sivu sto/Dokumentit/foamit/VaahtolasiesiteENG.p df [gefunden am 2013-08-14]

## Beschreibung

Die vorliegende Erfindung betrifft eine aushärtbare Schaumglas-Gussmasse für ein Bauwerk, vorzugsweise für den Strassen-, Hoch- und Tiefbau, sowie mögliche Herstellungsverfahren für eine solche Schaumglas-Gussmasse.

Schaumglasprodukte sind zur Anwendung in verschiedensten Baukonstruktionen bekannt, wie beispielsweise im Fassadenbau, als Auskleidungs-, Boden- oder Deckenelemente von Bauwerken, bei der Gestaltung von Gartenlandschaften oder Sportanlagen oder bei der Erstellung von Lärm- und Schutzwänden. Dabei können fertige Schaumglasplatten verwendet werden oder das Schaumglasprodukt kann als Schüttgut, wie etwa in Form von Leichtbeton oder Porenbeton, vorgesehen sein. Im Vergleich zu anderen Zuschlagstoffen für ein Schüttgut, wie etwa Sand, Kies, Tuff oder Bimsstein, hat Schaumglas den Vorteil einer guten Wärmedämmung und Schallisolierung, eines geringen Gewichts und einer guten Drainagefähigkeit. Als anorganischer Stoff kann Schaumglas resistent gegen Verrottung und Alterung sein.

Aus der EP2281964 A1 ist beispielsweise ein gegossenes Wand-, Boden oder Deckenelement bekannt, das als vor Ort gegossenes Bauteil eines Gebäudes dient. Als aushärtbare Gussmasse wird dabei ein Gemisch aus Zementen, Bindemitteln, Schaumglas oder Blähton als Zuschlagstoff, Anmachwasser und Additiven verwendet. Zur Herstellung einer Betonwand wird z. B. die Gussmasse vor Ort gemischt und zwischen Schalungswände eingebracht.

In der WO 00/63132 wird ein Leichtbeton in Form einer fliessfähigen aushärtbaren Gussmasse beschrieben. Die Gussmasse weist ein Bindemittel und gekörnte Zuschlagstoffe ausschliesslich in Form von gebrochenem Schaumglas auf. Als Bindemittel wird Zement vorgeschlagen, wodurch ein Leichtbeton mit gebrochenen Schaumglasbrocken als Leichtzuschlagstoff entsteht. Die Verwendung gebrochener Schaumglasbrocken senkt das Gewicht des aus der Gussmasse gegossenen Körpers. Ferner wird die Biegezugfestigkeit verbessert und der Wärmeausdehnungskoeffizient erniedrigt.

Ferner werden als Bindemittel Kunststoffe, Kalk, Kasein oder Wasserglas erwähnt. Für dichte, druckfeste und leichte Gefüge wird eine Gussmasse vorgeschlagen, die Schaumglasbrocken unterschiedlicher Korngrösse aufweist. Ferner können weitere Additive beigemischt werden, etwa zur Schliessung und besseren Verklebung der Porenoberfläche oder Einfärbung. Um eine hohe Druckfestigkeit zu erreichen wird vorgeschlagen, das Raumgewicht zu erhöhen und Schaumglasbrocken mit kleiner Porengrösse zu verwenden.

Die bekannten Schaumglas-Gussmassen sind jedoch für Beläge im Strassenbau nur wenig geeignet. Zum einen ist eine heisse Gussmasse auf Grund der geringen inneren Reibung bei hohen Temperaturen kaum belastbar. Eine Walzverdichtung ist deshalb erst nach einem Abkühlen auf ca. 60° möglich. Dabei ist es zudem nachteilig, dass ein Aussenbereich eines ausgebrachten Gussmassehaufens deutlich schneller abkühlt, als ein Innenbereich. Im weiteren kann das Material über Stunden die Wärme speichern. Der Aussenbereich kann daher verkrusten und muss abgetragen werden, bevor der Rest der Gussmasse verarbeitet werden kann. Zum anderen kann das Schaumglas bei Überlast einem Abrieb, Kantenbruch und Kornbruch unterliegen. Somit kann eine plastische und irreversible Verformung des mit der Schaumglas-Gussmasse hergestellten Produkts die Folge sein. Insbesondere bei einer dynamischen Belastung, z. B. durch das Befahren einer Baustellen-Strasse mit einer Lage aus Schaumglas-Gussmasse durch schwere Lastkraftwagen, kann eine ungleichmässige Verdichtung der Schaumglaslage entstehen und den Strassenoberbelag dauerhaft deformieren. Oder es kommt zu drastischen Zertrümmerungen der Schaumglasbrocken.

Es ist daher eine Aufgabe der Erfindung, eine Schaumglas-Gussmasse zu schaffen, die einfach in der Herstellung ist, schnell und unkompliziert verarbeitet werden kann und während der Verarbeitung nach der Aushärtung durch Abkühlung einer hohen Druckbelastung standhält; insbesondere soll eine Schaumglas-Gussmasse geschaffen werden, die für Beläge im Strassenbau geeignet ist. Ferner ist es eine Aufgabe der Erfindung ein Herstellungsverfahren zur Herstellung einer Schaumglas-Gussmasse aufzuzeigen, das die Eigenschaften von Schaumglas-Gussmasse verbessert, insbesondere dessen Belastbarkeit bei einer Verwendung als Belag im Strassenbau verbessert, und in einfacher und kostengünstiger Weise ausgeführt werden kann.

Diese Aufgabe wird von der Erfindung durch eine Schaumglas-Gussmasse, ein Bauwerk und ein Verfahren zur Herstellung einer Schaumglas-Gussmasse gelöst. Vorteilhafte Ausgestaltungen und weitere Ausführungsbeispiele sind in den abhängigen Ansprüchen beschrieben.

Eine Schaumglas-Gussmasse für ein Bauwerk nach der vorliegenden Erfindung ist wenigstens aus einem Bitumen-Bindemittel mit zumindest einem Anteil an Bitumen und Schaumglasschotter aus porösen Schaumglasstücken gemischt. Die Schaumglasstücke des Schaumglasschotters (31) weisen eine Korngrösse von 1-100 mm und das Bitumen-Bindemittel (24) weist zumindest einen Anteil an Hartbitumen mit einer Penetration zwischen 1 und 25 [0.1 mm] auf. Je nach Anforderung an die Schaumglas-Gussmasse bzw. an das Bauwerk, vollständig aus der Schaumglas-Gussmasse hergestellt oder nur mit einer Lage der Schaumglas-Gussmasse versehen, können Additive und/oder Mineralstoffe beigegeben werden. Die Schaumglas-Gussmasse ist in warmem bis heissem Zustand formbar und in erkaltetem Zustand ausgehärtet. Das Bitumen-Bindemittel umhüllt die Schaumglasstücke des Schaumglasschotters vollständig. Daraus ergibt sich ein bituminös gebundener Schaumglas-Schotter, der warm bis heiss zur Erstellung des Bauwerks eingebracht werden kann und während der Abkühlung z. B. mit leichten Verdichtungsgeräten, wie etwa. Vibroplatte, verdichtet wird. Vorzugsweise füllt das Bitumen-Bindemittel das Hohlraumvolumen der Schaumglasstücke zumindest zum überwiegenden Teil und vorteilhaft zumindest annähernd vollständig aus. Besonders bevorzugt füllt das Bitumen-Bindemittel nur das Hohlraumvolumen der Kornoberfläche der Schaumglasstücke zumindest annähernd vollständig aus. Dadurch werden die Schaumglasstücke durch das Bitumen verklebt und durch die ggf. beigemischten Additive gegen Bruch stabilisiert und versiegelt.

Auf Grund der Bitumenumhüllung kann die Schaumglas-Gussmasse kein Wasser auf der porösen Aussenseite der Schaumglasstücke aufnehmen. Im Gegensatz zu Schaumglasstücken ohne Umhüllung ist Anhaftwasser bei bituminös gebundener Schaumglas-Gussmasse nach der Erfindung deutlich reduziert. Im Falle von Schaumglasstücken der Sorte Misapor 10/50 beträgt das Anhaftwasser ohne Umhüllung mit dem Bitumen-Bindemittel z. B. ca. 15-20%, während nach der Erfindung umhüllte Schaumglasstücke der gleichen Sorte weniger als 1% Anhaftwasser aufweisen. Die Frostsicherheit eines Bauwerks wird dadurch erheblich erhöht und das Bauwerk erodiert nicht durch Frost- oder Taueffekte. Eine Verarbeitung ist auch unter leichtem Regeneinfluss möglich. Die Verdichtung z. B. mit Walzen od. Vibroplatte ist vergleichsweise staubfrei und unter starkem Windeinfluss möglich. Durch die Verklebung der Schaumglasstücke miteinander bei der erfindungsgemässen Schaumglas-Gussmasse können auch leichte Hügelaufschüttungen, Dämme, Anrampungen und dergleichen erstellt werden. Bei grossen Aufschüttungen mit ungebundenem Schaumglasschotter kann z. B. als oberste Schicht eine bituminös gebundene und verdichtete Schicht der Schaumglas-Gussmasse nach der Erfindung als Sauberkeitsschicht verwendet werden. Dadurch wird verhindert, dass unerwünschte Substrate oder Verschmutzungen in die Aufschüttung eindringen. Bei der Befahrung mit schweren Geräten, z. B. für weitere Arbeitsetappen, schützt die Schicht aus Schaumglas-Gussmasse nach der Erfindung das Material der nicht gebundenen losen Aufschüttung, das z. B. ebenfalls durch Schaumglasschüttgut gegeben sein kann.

Bei einer Schaumglas-Gussmasse gemäss Erfindung ist eine Verarbeitung der Masse, wie z. B. ein Walzen, bereits bei einer Temperatur von 70° und mehr, insbesondere bei 80° und mehr, möglich. Im Gegensatz dazu ist bei herkömmlichen Schaumglas-Gussmassen eine Abkühlung auf 60° und weniger erforderlich. Flachdächer können so z. B. heiss eingedeckt werden, wodurch sich die Isolation beträchtlich erhöht. Aufwendige Arbeiten, wie Kleben, Verlegen, Versiegeln wie z. B. bei herkömmlichen SchaumglasPlatten, entfallen oder werden entsprechend günstiger. Hang- und Böschungssicherungen können schnell auch in sehr steilem Gelände vollzogen werden. Es sind schnelle Abbindezeiten möglich, evtl. auch unterstützt durch zusätzliche Kühlung nach Verdichtung durch eine Wasserberieselung. Geländemodellierungen oder Erhöhungen können mit der heissen Schaumglas-Gussmasse gemäss der Erfindung einfach vollzogen werden. Für die Aufbereitung bzw. Vermischung des Bitumen-Bindemittels sind keine zusätzlichen Installationen, wie etwa separate Ortsbeton-Mischer, notwendig. Letztlich besteht durch das relativ kleine spezifische Gewicht der Schaumglas-Gussmasse nach der Erfindung die Möglichkeit schwieriges Gelände ohne grosse Flurschäden zu erreichen.

Die fertig gebundene Schaumglas-Gussmasse kann auch mit Helikopter geflogen werden wie bspw. in schwer zugänglichem Gelände (Bergregionen).

Ferner wirkt die Schaumglas-Gussmasse u.a. als kapillarbrechende, lastabtragende Wärmedämmung.

Zur Herstellung der Schaumglas-Gussmasse wird Schaumglasschotter mit Schaumglasstücken verwendet, deren Korngrösse 1-100mm beträgt. Vorteilhaft werden grosse Korngrössen gewählt, um das Eindringen und die Umhüllung des Bitumen-Bindemittels in das Hohlraumvolumen, insbesondere das oberflächliche Hohlraumvolumen, wie offene Luftporen der Schaumglasstücke zu erleichtern. In einer bevorzugten Schaumglas-Gussmasse werden z. B. Schaumglasstücke mit einer Korngrösse von 10/50mm oder grösser verwendet, wie sie z. B. von Misapor bekannt sind. Ein derartiger Schaumglasschotter ist als Recyclingprodukt aus Altglas erhältlich. Für die Schaumglas-Gussmasse nach der Erfindung kann vorteilhaft auch Schaumglasschotter verwendet werden, der Schaumglasstücke unterschiedlicher Korngrössen und/oder Porosität umfasst. Eine derart abgestufte Schaumglas-Gussmasse hat einen sehr kleinen Hohlraumgehalt. Dadurch kann z. B. auf verschiedene Anforderungen an ein bestimmtes Bauwerk eingegangen werden. Ferner entsteht dadurch weniger Hohlraum im Bauwerk.

Das Bitumen-Bindemittel für die Schaumglas-Gussmasse umfasst zumindest einen Anteil an Industriebitumen, wie z. B. Oxidationsbitumen oder Hartbitumen, der auch mit weicherem Bitumen und/oder modifizierten Bitumen vermischt werden kann. Als Hartbitumen wird in diesem Zusammenhang Bitumen mit einer Penetration zwischen 1 und 25 [0.1mm] bezeichnet. Das Bitumen-Bindemittel wird auf die Art des Schaumglasschotters abgestimmt, beispielsweise wird die Penetrationsfähigkeit an die Porosität der Schaumglasstücke angepasst. Weiter können die Eigenschaften des Bitumen-Bindemittels durch Zugabe von Additiven modifiziert werden. Mit Additiven kann beispielsweise die Härte des Bitumen-Bindemittels eingestellt oder zusätzlich modifiziert werden, wodurch die Verklebung vorteilhaft beeinflusst wird. Ferner kann die Druckfestigkeit und das Temperaturverhalten den Anforderungen angepasst werden. Vorteilhaft ist das Bitumen-Bindemittel als ein Mastix aus Bitumen, Sand und Füllermineralien ausgebildet. Auch ein Splitt- Mineralstoffgemisch mit anderen Leichtbaustoffen, die leichter als Zement/Sand-Baustoffe sind, wie z.B. Blähton, kann beigefügt werden. Es kann z. B. Normierter -Brechsand der Korngrösse 0/2mm oder 0/4mm verwendet werden oder Rundsand. Auch der Mastix kann Additive zur Regulierung der Penetrationsfähigkeit in das Hohlraumvolumen der Schaumglasstücke umfassen. Beispielsweise können dem Mastix Fischer-Tropsch-Wachse und/oder AmidWachse zugesetzt werden, um die Temperatur zu reduzieren und dennoch die gewünschte Verarbeitbarkeit und Verdichtung zu gewährleisten. Die Fischer-Tropsch-Wachse oder Amidwachse dienen zur Regulierung der Viskosität. Ferner können Polymere oder ein polymermodifiziertes Bindemittel, beigegeben werden. Die Polymere oder das polymermodifizierte Bindemittel erhöhen die Dauerhaftigkeit sowie Festigkeit der Schaumglas-Gussmasse. Als Polymere oder polymermodifizierte Bindemittel eignen sich z. B. Polymerbitumen (PmB), wie PE, PP oder PVC, SBS (Styrol-Butadien-Styrol), Polyolefine, wie APP (ataktisches Polypropylen), EVA (Ethylen-Vinyl-Acetat), Ethylen-Propylen-Copolymer oder Gemische davon.

Die zugemischten SBS-Polymere dienen der Verklebung und/oder Regulierung der Elastizität und führen zu besseren Elastizitätseigenschaften bei tiefen Temperaturen unter dem Gefrierpunkt. Auch wird die Affinität zwischen Bitumen-Bindemittel und dem Schaumglasschotter dadurch wesentlich verbessert, wodurch die Klebeigenschaften und die Penetration verbessert werden.

Zur Herstellung des Mastix können an sich alle bekannten feststehenden und mobilen Asphaltproduktionsanlagen eingesetzt werden, sofern sie dem erfinderischen Verfahren angepasst werden. Der fertig aufbereitete und je nach Anforderungen modifizierte Mastix wird mit dem Schaumglas im Anlagenmischer vermengt und auf einen vorzugsweise beheizbaren Transportbehälter, bzw. -Kocher geladen. Durch zusätzliches Nachmischen im Transportkocher auf der Fahrt zur Verarbeitung der Schaumglas-Gussmasse an einer Baustelle wird der Schaumglasschotter mit dem Mastix vermischt. Das Schaumglasmaterial wird komplett mit dem modifizierten Mastix gleichmässig umhüllt und der Mastix dringt teilweise in das Hohlraumvolumen ein, respektive verklebt die Schaumglasstücke miteinander. Gemäss der Erfindung unterliegt dabei das Gemisch aus Mastix und Schaumglasschotter in einem Mischbehälter und/oder dem Transportbehälter einer langsamen Drehung des Behälters.

Die Drehzahlen auf den geheizten Transportmischern für die Durchmischung der Schaumglas-Gussmasse belaufen sich zwischen 1 und 10 Undrehungen pro Minute bezogen auf den Transportbehälter-Querschnitt von 1500mm bis 2500mm. Der Transportmischer kann Rührarme an der motorangetriebenen Welle verwenden, die auf den geheizten Transportmischern horizontal oder vertikal angeordnet sein können (je nach Typ). Die Umhüllung mit Bitumen-Bindemittel verklebt die einzelnen Schaumglasstücke miteinander. Der gemäss der vorliegenden Erfindung mit Bitumen heiss umhüllte und durchdrungene Schaumglasschotter ist damit eine einzigartige bitumengebundene hochstandfeste und leichte Schaumglas-Gussmasse, welche für viele Bauwerke eingesetzt werden kann. Es bietet gegenüber Betonumhüllungen respektive zementgebundenem Schaumglasschotter viele Vorteile, wie z. B. eine höhere Verformungsfestigkeit gegen Bruch. Die wird dadurch ermöglicht, dass eine bessere Verklebung durch mehr bituminöses Bindemittel im Vergleich zum Stand der Technik entsteht. Weiter entsteht keine ganz starre Verbindung zwischen den Schaumglas-Körner. Bitumen ist gegenüber Zement eine halbstarres Verbindungsmittel, das nach der Art eines Klebers wirkt. Im weiteren wird durch die schnelle Abbindezeit, nur durch Abkühlung innert max. 24h, gegenüber Zementgebundenen Systemen erheblich Zeit eingespart.

Ein Bauwerk gemäss der vorliegenden Erfindung weist zumindest eine Lage aus einer Schaumglas-Gussmasse wie vorher beschrieben auf, wobei die Lage aus Schaumglas-Gussmasse in erkaltetem Zustand eine mittlere Druckfestigkeit von 2.0 - 3.0 N/mm² aufweisen kann. Im Vergleich dazu weist eine lose verdichtete Schaumglas-Schotterschicht eine Druckfestigkeit von 0.6N/mm² auf, wobei auch entsprechend mehr Material infolge der Verdichtung und Stauchung, eingesetzt werden muss. In einer Variante weist das Bauwerk eine geschüttete Lage aus Schaumglas-Gussmasse auf und erreicht die mittlere Druckfestigkeit von 2.2 N/mm² in erkaltetem Zustand ohne zusätzliche Verdichtung.

Das Bauwerk ist beispielsweise eine Flachdachabdeckung, eine Kraftfahrzeugstrasse, eine Eisenbahntrasse oder eine Hochwasserschutzanlage. Ferner kann eine solche Lage vorteilhaft in Bauwerken des Teichbaus und Deponiebaus, bei Sport- und Rasenplätzen, bei Böschungssicherungen und Perimeterdämmungen verwendet werden. Die Lage aus bitumengebundenem Schaumglas-Gussmasse nach der Erfindung kann beispielsweise als stabilisierende Schicht zwischen Nutzschichtaufbauten und Schotter-Schüttung, als Leichtüberdeckung von Unterterrain wie Tiefgaragen etc., als Leichtschüttung für die Gestaltung von Hügeln als Lärmschutz, als Sauberkeitsschicht gegen Grundwasser und schlechten Baugrund, als Abdichtungsbelag oder Isolationsbelag, als Tragschicht für Gehwege und Pflasterungen, als Auskleidung von Pflanzentrögen und als frostsichere Schicht oder Gründung bei der Verlegung von Gartenplatten und Verbundsteinen verwendet werden.

Nach einem weiteren Aspekt der vorliegenden Erfindung wird ein Verfahren zur Herstellung einer Schaumglas-Gussmasse bestehend aus einem Bitumen-Bindemittel mit zumindest einem Anteil an Bitumen und Schaumglasschotter aus porösen Schaumglasstücken gezeigt. Bei dem Verfahren erfolgt erfindungsgemäss eine Lagerung von heissem Bitumen-Bindemittel in einem ersten temperaturgeregelten Behälter und eine Lagerung von Schaumglasschotter in einem oder mehreren zweiten Behältern. Die Schaumglasschotterbehälter können ebenfalls temperaturgeregelt sein, so dass auch der Schaumglasschotter vortemperiert sein kann. Alternativ dazu kann der Schaumglasschotter auch in Big-Bags gelagert sein. Eine Mischanlage, beispielsweise eine Asphaltaufbereitungsanlage oder ein Transportmischer (fest- oder mobilstationär), wird mit heissem Bitumen-Bindemittel und Schaumglasschotter gemäss einem vorbestimmten Mengenverhältnis beschickt. Dabei können zunächst der Schaumglasschotter und ggf. weitere Materialien in die Mischanlage eingebracht und vermischt werden. Gleichzeitig mit dem Mischen kann das Eindüsen oder die manuelle Zugabe des heissen, dosierten Bitumen-Bindemittels erfolgen. Das Bitumen-Bindemittel und der Schaumglasschotter werden durch langsame Rotation der Mischanlage derart gemischt, dass das Bitumen-Bindemittel zumindest teilweise in ein Hohlraumvolumen der Schaumglasstücke eindringt und dieses verklebt. Vorzugsweise wird die Schaumglas-Gussmasse in der Mischanlage derart vermischt, dass ein zumindest annähernd vollständiges Eindringen des Bitumen-Bindemittel in das Hohlraumvolumen möglich ist. Hierfür kann die Mischanlage (Asphalt-Mischanlage oder Transportmischer, insbesondere Gussasphalt-Transportmischer) beispielsweise eine drehbare Trommel aufweisen, innerhalb der die Schaumglas-Gussmasse zum Vermischen vorgesehen werden kann, wie oben erwähnt. Die Mischanlagen werden vorzugsweise mit einer Rotationsgeschwindigkeit von 1-10 Umdrehungen pro Minute betrieben.

Bei einem zu schnellen Drehen wird das Eindringen des Bitumen-Bindemittels in Schaumglasstücke verhindert und grössere Kornzertrümmerungen des Schaumglasschotters bei der weiteren Verwendung sind die Folge. Die Mischgeschwindigkeit wird daher in Bezug auf ein optimales Eindringen eines bestimmten Bitumen-Bindemittels in das Hohlraumvolumen und Umhüllen eines bestimmten Schaumglasschotters angepasst. Erfindungsgemäss erfolgt eine Mischung in einer Mischlage mit einer Geschwindigkeit von 1-10 Umdrehungen pro Minute.

Vorteilhaft können der Schaumglas-Gussmasse Mineralstoffe beigemischt werden, die vor der Beschickung erhitzt werden. Die Mineralstoffe werden zunächst vordosiert und dann getrocknet und erhitzt. Gleichzeitig können die Mineralstoffe entstaubt und einer Eigenfüllergewinnung unterliegen, wobei bei der Trocknung oder Entstaubung ausgeschiedenes Mineral rückgeführt wird. Die heissen Mineralstoffe können anschliessend gesiebt und nach Korngrössen getrennt in isolierten Heisslagertaschen gelagert werden. Letztlich werden die Mineralstoffe dosiert und entsprechend einem vorgegebenen Mengenverhältnis zwischen dem Bitumen-Bindemittel und dem Schaumglasschotter in die Mischanlage zugegeben. Als Mineralstoffe können Sand, Splitt, Kies oder eine Mischung daraus dienen. Natürlich kommen auch weitere Mineralstoffe in Betracht gezogen werden, wie sie aus der herkömmlichen Herstellung von Schaumglas-Gussmassen oder Asphaltbelägen bekannt sind.

Ferner können der Schaumglas-Gussmasse Füllermineralien und / oder Faserstoffe beigemischt werden. Dabei können Eigen- und/oder Fremdfüller-Mineralien verwendet werden, die dosiert und entsprechend einem vorgegebenen Mengenverhältnis dem Bitumen-Bindemittel und dem Schaumglasschotter zugegeben werden. Je nach Anforderung an die Schaumglas-Gussmasse und nach Auslegung der Mischanlage besteht die Möglichkeit der Zugabe von Asphaltgranulat und / oder Recyclingmaterial oder ähnlichem. Die Zugabe kann auch als Heisszugabe mit temperierten Materialien erfolgen.

Eine Entleerung der Mischanlage erfolgt wahlweise als Direktbeladung auf einen Lastkraftwagen oder in Vorratsbehälter, wie etwa Lagertaschen eines Verladesilos, in welchen die Schaumglas-Gussmasse zwischengelagert werden kann. Vorzugsweise wird ein mobiler Gussasphalt-Transportkocher oder mobile Asphalt- oder Recycling-Mischanlage verwendet, wodurch die fertiggemischte Schaumglas-Gussmasse unmittelbar zur Konstruktion des Bauwerks verwendet werden kann.

Ein vorbestimmtes Mischungsverhältnis von Bitumen-Bindemittel, Schaumglas-schotter, Mineralstoffen und ggf. weiteren Materialen ergibt sich aus einer Rezeptvorgabe, die auf eine bestimmte Verwendung der Schaumglas-Gussmasse und/oder der für die Gussmasse verwendeten Schaumglasstücke abgestimmt ist. Dabei wird für die Schaumglasstücke eine Korngrösse entsprechend einer erforderlichen Belastbarkeit eines zumindest teilweise mit der Schaumglas-Gussmasse erstellten Bauwerks ausgewählt. Ferner wird das Bitumen-Bindemittel der Korngrösse und Umgebungstemperatur angepasst, so dass ein leichtes Eindringen des Bitumen-Bindemittel in das Hohlraumvolumen ermöglicht wird.

Ein Beispiel für eine Rezeptvorgabe für eine Schaumglas-Gussmasse nach der Erfindung sieht wie folgt aus. Es wird ein Mastix (Bindemittel modifiziert) verwendet mit 0-4mm Sand (alternativ 0-2mm) (25-35% Mengenanteil), bei Bedarf Splitt 2-4mm, Eigen-Füller und Fremdfüller (gemeinsam 40-45% Mengenanteil), Bitumen 20/30 (alternativ Bitumen 70/100 oder Bitumen mit PmB-E) (15-20% Mengenanteil) und Trinidad-Naturasphalt-Pulver (2-5% Mengenanteil). Trinidad-Naturasphalt-Pulver verbessert im Mastix die Homogenität und Verdichtbarkeit, die Haftfestigkeit und Resistenz gegen Wassereinwirkung, die Verformungsbeständigkeit, den Ermüdungswiderstand, die Rissbildungsresistenz und Alterungsbeständigkeit. Weiter werden Additive verwendet, in Gewichtsprozent bezogen auf die Bitumenmenge: PmB-Granulat (SBS Typ: Kraton) (2-3%), Granulat in Form von FT-Wachs (Sasobit) (1-2%), Montanwachs (Romonta) (0.5-1%) und Licomont BS 100 (1-2%). Dabei dient Sasobit z. B. dazu, die Viskosität des verwendeten Bitumens herabzusetzen. Die Additive und weitere Zusätze können je nach Anforderung angepasst, ergänzt oder geändert werden. Für 6-7m³ Schaumglasschotter mit 10/50mm Schottergrösse à 200kg/m³, d. h. insgesamt ca. 1200kg, werden 2.5m³ Mastix à 1000kg, d. h. insgesamt 2500kg, verwendet. Daraus ergibt sich ein theoretisch berechnetes, spezifisches Gewicht der fertig geschütteten Schaumglas-Gussmasse von 560kg/m³. Allgemein erhält man ein spezifisches Gewicht der fertig geschütteten Schaumglas-Gussmasse zwischen 500 und 900 kg/m³. Grundsätzlich sind dabei kleinere oder grössere Schotter mit jeglichen Kornabstufungen möglich.

Die Verwendung von PmB-Bitumen ermöglicht bei der Schaumglas-Gussmasse nach der Erfindung folgende Vorteile. Die Viskosität gegenüber Bitumen ohne PmB Additive bei gleicher Penetration wird stark erhöht. Dadurch können mit PmB höhere BM-Mengen dosiert werden. Dies führt in einem Asphaltaufbau zu einer grösseren BM-Schichtdicke, womit die Lebensdauer des Asphaltes erhöht wird, und die untere Tragschicht ist stabiler gegen Ermüdungsrisse. Der Widerstand gegen Spurrinnenbildung und Risse wird verbessert. Es liegt eine erhöhte Stabilität bei hohen Temperaturen und starker Belastung vor. Ferner entstehen weniger Kornausbrüche und Risse bei Kälte bis-30°C. Der Erweichungspunkt (Ring- u. Kugel-Wert, Norm SN EN 1426/1427) wird erhöht und der Brechpunkt nach Fraass (Norm SN EN 12593) erniedrigt was zu einer höheren Plastizitätsspanne führt.

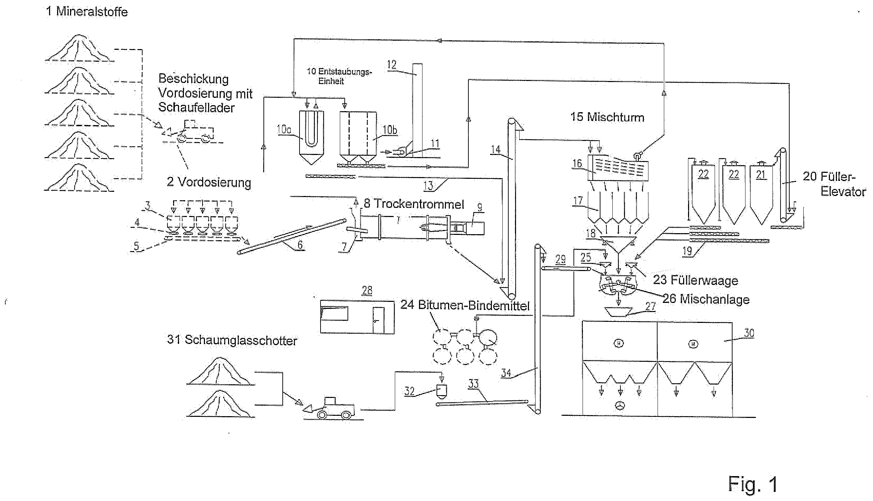

Eine bevorzugte Ausführungsart der Erfindung wird im Folgenden anhand eines Verfahrensfliessbilds gemäss Figur 1 dargestellt, welches lediglich zur Erläuterung dient und nicht einschränkend auszulegen ist. Aus Figur 1 offenbar werdende Merkmale der Erfindung sollen einzeln und in jeder Kombination als zur Offenbarung der Erfindung gehörend betrachtet werden.

Das Verfahrensfliessbilds aus Figur 1 zeigt die einzelnen Stationen der Herstellung einer Schaumglas-Gussmasse nach der vorliegenden Erfindung. Es werden verschiedene Mineralstoffe 1 bereitgestellt, z. B. Sand, Splitt und Kies, die beispielsweise in Dosiergeräten 3 getrennt gelagert werden. Der Abzug der Mineralstoffe 1 aus den Dosiergeräten 3 erfolgt nach einer vorbestimmten Rezeptvorgabe für die Schaumglas-Gussmasse durch regelbare Abzugsbänder 4 in einer entsprechenden Dosis. Die Mineralstoffe werden von dort mit einem Sammelband 5 und Förderbändern 6 über ein Trommelwurfband 7 einer Trockentrommel 8 zugeführt. Die Trockentrommel 8 kann vorteilhafter Weise spezielle Trommeleinbauten, wie z. B. hervorstehende Rippen oder der gleichen, aufweisen. Andere vergleichbare Zuführsysteme sind ebenfalls denkbar. Aus der Trockentrommel 8 werden die Mineralstoffe in einen Heisselevator 14 abgegeben.

In der Trockentrommel 8 wird ein Trocknungsprozess durchgeführt, der geregelt unter Berücksichtigung der Art der Mineralstoffe 1 und ihrer Feuchtigkeit abläuft. Die erforderliche Prozesswärme zur Mineraltrocknung wird durch Erhitzen des Innenraums der Trockentrommel 8 mit einem Brenner 9 erzeugt. Als Brennstoff kann z. B. leichtes Heizöl verwendet werden. Während des Trocknungsprozesses wird die Trockentrommel 8 gedreht, so dass die Mineralstoffe durch die Trommeleinbauten aufgelockert und erhitzt werden. Während dessen werden Mineralstoffe erhitzt und anschliessend ausgetragen.

Die beim Trocknungsprozess entstehenden staubbelasteten Heissgase werden über eine Entstaubungseinheit 10 durch einen Exhauster 11 abgesaugt. In der Entstaubungseinheit 10 werden die Staubpartikel in Grobstaub und Feinstaub getrennt. Die Heissgase werden hierfür einem Vorabscheider 10a zugeführt, in dem der Grobstaub 13 abgesondert wird. Weiter wird das Gas einer Feinentstaubung 10b für Feinstaub zugeführt, in der die Gase vom Reststaub gereinigt werden. Das daraus resultierende entstaubte Reingas wird durch einen Kamin 12 abgeführt. Der Grobstaub 13 kann über den Heisselevator 14 dem Mischprozess zugeführt werden. Der Feinstaub wird über eine Füllerschnecke und einen Füllerelevator 20 einem Silo für Eigenfüller 21 zugeführt und nach dem vorgegebenen Rezept in den Mischprozess gegeben. Von dort kann der Feinstaub mittels einer Füllerschnecke und einer Waage gemäss der Rezeptvorgabe als Eigenfüller der Mineralmischung zugegeben werden. Dies ermöglicht einen effizienten und sparsamen Umgang mit den Mineralstoffen.

Das Bitumen-Bindemittel 24 wird in Lagertanks gelagert, die temperaturgeregelt werden können, so dass das Bitumen-Bindemittel heiss gelagert werden kann. Dadurch wird eine gewünschte Verarbeitungstemperatur immer gewährleistet. Das Bitumen-Bindemittel 24 kann dabei bereits als fertiger Bitumen-Mastix vorliegen, der entsprechend bestimmten Anforderungen an das Bitumen-Bindemittel aus Hartbitumen, Weichbitumen, Sand und Additiven etc. hergestellt ist. Dadurch kann z. B. die Penetrationsfähigkeit des Mastix in das Hohlraumvolumen der Schaumglasstücke geregelt werden.

Anstelle von Heissbitumen kann auch ein Kaltbitumen auf Emulsionsbasis verwendet werden. Somit kann ein Kaltverarbeitungsverfahren durch Luftaushärtung realisiert werden. Anstelle von Füllermineralien kann dabei auch Zement verwendet werden.

Dabei erfolgt die Verarbeitung als Bitumenemulsion (Bitumen in Wasser emulgiert), Zugabe von Wasser und Umgebungsluft Schaumbitumen oder die Zugabe von Lösemitteln, sogenanntes Verschnittbitumen. Weiterhin werden zur leichteren Verarbeitbarkeit Fluxmittel (petrostämmig hinzugegeben. Bei den Fluxmitteln handelt es sich um schwerflüchtige Öle (Fluxöle).

Der Mischprozess der Schaumglas-Gussmasse nach der Erfindung erfolgt in einem Mischturm 15, welcher zumindest eine Siebmaschine 16, Mineralbehälter 17, eine Wägeeinheit bestehend aus Mineralstoffwaage 18, Füllerwaage 23 und Bindemittelwaage 25, und eine Mischanlage 26. Der Mischturm 15, insbesondere die Siebmaschine 16, kann unter Unterdruck stehen, um Staubaustritt zu vermeiden. Dabei saugt ein Ventilator auftretende Stäube ab und führt diese über eine Rohrleitung der Entstaubungseinheit 10 zu.

Die getrockneten, heissen Mineralstoffe aus der Trockentrommel 8 und der Grobstaub 13 aus der Entstaubungseinheit 10 können mit dem Heisselevator 14 in die Siebmaschine 16 gefördert werden. Je nach Auslegung des Siebes der Siebmaschine kann die Mischung nach Korngrösse getrennt und in Mineralbehältern 17, die als Heissmineraltaschen dienen, zwischengelagert werden. Anschliessend werden die Mineralstoffe entsprechend der vorgegebenen Rezeptur aus den Mineralbehältern 17 abgezogen, in der Mineralstoffwaage 18 gewogen und der Mischanlage 26 zugegeben. Je nach Rezept werden die einzelnen Mineralstoffsorten in der Mineralwaage 18 gewichtsmässig zusammengestellt. Mit dem Füllerelevator 20 kann Füllermaterial in Form von Eigenfüllern 21 und Fremdfüllern 22 zur Füllerwaage 23 gefördert und gemäss dem Rezept verwogen werden. Anschliessend wird es ebenfalls in die Mischanlage 26 gegeben. Weiter können z. B. über den Füllerelevator 20 Faserstoffe und / oder Recyclingmaterial in die Mischanlage befördert werden. Weitere Zugabestoffe können dem Mischprozess über eine Zugaberutsche in die Mischanlage 26 abgegeben werden. Die Zugaberutsche kann eine Klappe aufweisen, die geöffnet werden kann. Die Öffnung kann über eine Signalgebung durch Sensoren erfolgen.

Schaumglasschotter 31 wird auf einer Lagerstätte gelagert und von dort z. B. mittels Schaufelladern einer Dosiereinheit 32 zugeführt. Abzugsbänder 33 beschickten einen Schaumglaselevator 34 mengengeregelt mit Schaumglas-schotter 31. Über ein Verbindungsband 29 gelangt der entsprechend dem Rezept dosierte Schaumglasschotter 31 in die Mischanlage 26.

Die Materialien werden in der Mischanlage 26 gemischt. Gleichzeitig erfolgt ein Eindüsen der gemäss Rezept vorgegebenen Menge an Bitumen-Bindemittel 24, welches in der Bindemittelwaage 25 dosiert wird. Die Mischanlage 26 ist ebenfalls temperaturgeregelt.

Die Mischanlage 26 weist vorteilhaft Rotationselemente auf, die ein langsames Vermischen der Materialien mit dem Bitumen-Bindemittel 24 gewährleisten. Die Rotation der Elemente weist dabei eine Geschwindigkeit von 1-10 Umdrehungen pro Minute auf. Die entstehende Schaumglas-Gussmasse nach der Erfindung bewegt sich somit mit einer durchschnittlichen Geschwindigkeit von 1-10 Umdrehungen pro Minute. Die Rotationselemente weisen eine geeignete Form auf, um ein langsames Mischen bei gleichzeitiger intensiver Durchmischung sicherzustellen. Die Geschwindigkeit wird insbesondere derart gewählt, dass keine Kornzertrümmerung erfolgt. Das Bitumen-Bindemittel 24 umhüllt dabei die porösen Schaumglasstücke des Schaumglasschotters von allen Seiten und kann in ein Hohlraumvolumen der Schaumglasstücke eindringen.

Die fertig gemischte bitumengebundene Schaumglas-Gussmasse wird aus der Mischanlage 26 direkt auf Lastkraftwagen beladen oder z. B. über eine Verteileinheit, wie etwa einen Querkübel 27 in Verladesilos 30 ausgetragen. Ein beim Mischprozess entstandenes Luft-Staub-Gemisch wird durch den Unterdruck aus dem Mischturm 15 in die Entstaubungseinheit 10 oder die Trockentrommel 8 abgeführt.

Das gesamte Herstellungsverfahren kann über eine Anlagensteuerung 28 gesteuert werden. Die Anlagensteuerung 28 steuert das Herstellungsverfahren gemäss einem vorgegebenen Mischrezept, welches die Mengenverhältnisse an Schaumglasschotter 31, Bitumen-Bindemittel 24, Mineralstoffen 1, etc. festlegt. Die Anlagensteuerung 28 dient ferner der Überwachung, generiert Störmeldungen im Fall von Unregelmässigkeiten im Herstellungsverfahren, ermöglicht eine Anpassung des Herstellungsverfahrens und erstellt einen Produktionsnachweis.

Vorzugsweise wird ein beheizter Gussasphalt-Transportkocher verwendet. Der Schaumglasschotter wird direkt in den Transportkocher gegeben.

Bei der Durchführung des Verfahrens ist es auch möglich, dass der Mastix aus Bitumen und allfälligen Additiven auf den geschütteten und verdichteten Schaumglas-Schotter im nachhinein als Verfüllmasse und Kleber aufgebracht wird. Dies kann heiss oder kalt erfolgen. Ferner ist es auch mögliche, dass die Schaumglas-Gussmasse mit üblichem Asphalt-Strassenfertiger eingebaut wird.

**BEZUGSZEICHENLISTE**

| | | | |
|---|---|---|---|
| 1 | Mineralstoffe | 19 | Füllermaterial |
| 2 | Vordosierung | 20 | Füllerelevator |
| 3 | Dosiergerät | 21 | Eigenfüller |
| 4 | Abzugsbänder | 22 | Fremdfüller |
| 5 | Sammelband | 23 | Füllerwaage |
| 6 | Förderbänder | 24 | Bitumen-Bindemittel |
| 7 | Trommelwurfband | 25 | Bindemittelwaage |
| 8 | Trockentrommel | 26 | Mischanlage |
| 9 | Brenner | 27 | Querkübel |
| 10 | Entstaubungseinheit | 28 | Anlagensteuerung |
| 10a | Vorabscheider | 29 | Verbindungsband |
| 10b | Feinentstaubung | 30 | Verladesilo |
| 11 | Exhauster | 31 | Schaumglasschotter |
| 12 | Kamin | 32 | Dosiereinheit |
| 13 | Grobstaub | 33 | Abzugsbänder |
| 14 | Heisselevator | 34 | Schaumglaselevator |
| 15 | Mischturm | | |
| 16 | Siebmaschine | | |
| 17 | Mineralbehälter | | |
| 18 | Mineralstoffwaage | | |

## Patentansprüche

1. Schaumglas-Gussmasse für ein Bauwerk, die wenigstens gemischt ist aus einem Bitumen-Bindemittel (24) mit zumindest einem Anteil an Bitumen und Schaumglasschotter (31) aus porösen Schaumglasstücken, wobei die Schaumglas-Gussmasse in warmem Zustand formbar und in erkaltetem Zustand ausgehärtet ist, **dadurch gekennzeichnet, dass** die Schaumglasstücke des Schaumglasschotters (31) eine Korngrösse von 1-100 mm und das Bitumen-Bindemittel (24) zumindest einen Anteil an Hartbitumen mit einer Penetration zwischen 1 und 25 [0.1 mm] aufweisen und
das Bitumen-Bindemittel (24) die Schaumglasstücke des Schaumglasschotters (31) vollständig umhüllt und ein Hohlraumvolumen der Schaumglasstücke zumindest teilweise ausfüllt.

2. Schaumglas-Gussmasse nach Anspruch 1, **dadurch gekennzeichnet, dass** das Bitumen-Bindemittel (24) das Hohlraumvolumen der Schaumglasstücke zumindest zum überwiegenden Teil ausfüllt.

3. Schaumglas-Gussmasse nach Anspruch 2, **dadurch gekennzeichnet, dass** das Bitumen-Bindemittel (24) eine Porenoberfläche des Einzelkorns der Schaumglasstücke zumindest zum überwiegenden Teil ausfüllt.

4. Schaumglas-Gussmasse nach einem der vorhergehenden Ansprüche, **dadurch gekennzeichnet, dass** die Schaumglasstücke des Schaumglasschotters (31) eine Korngrösse von 10-70 mm aufweisen, bevorzugt von 10-60 mm.

5. Schaumglas-Gussmasse nach einem der vorhergehenden Ansprüche, **dadurch gekennzeichnet, dass** der Schaumglasschotter (31) Schaumglasstücke unterschiedlicher Korngrösse und/oder Porosität umfasst.

6. Schaumglas-Gussmasse nach einem der vorhergehenden Ansprüche, **dadurch gekennzeichnet, dass** das Bitumen-Bindemittel (24) als ein Mastix aus Bitumen, Sand und Füllermineralien ausgebildet ist.

7. Schaumglas-Gussmasse nach Anspruch 6, **dadurch gekennzeichnet, dass** der Mastix Additive zur Regulierung der Penetrationsfähigkeit in das Hohlraumvolumen der Schaumglasstücke umfasst.

8. Schaumglas-Gussmasse nach Anspruch 6 oder 7, **dadurch gekennzeichnet, dass** der Mastix Fischer-Tropsch Wachse und/oder Amidwachse zur Regulierung der Viskosität umfasst.

9. Schaumglas-Gussmasse nach Anspruch 6 oder 7, **dadurch gekennzeichnet, dass** der Mastix Polymere oder polymermodifiziertes Bindemittel zur Verklebung und/oder Regulierung der Elastizität enthält.

10. Schaumglas-Gussmasse nach Anspruch 9, **dadurch gekennzeichnet, dass** als Polymere oder polymermodifizierte Bindemittel Polymerbitumen (PmB), wie PE, PP oder PVC, SBS (Styrol-Butadien-Styrol), Polyolefine, wie APP (ataktisches Polypropylen), EVA (Ethylen-Vinyl-Acetat), Ethylen-Propylen-Copolymer oder Gemische davon verwendet wird.

11. Schaumglas-Gussmasse nach einem der vorhergehenden Ansprüche, **dadurch gekennzeichnet, dass** anstelle von Heissbitumen ein Kaltbitumen auf Emulsionsbasis verwendet wird.

12. Schaumglas-Gussmasse nach einem der vorhergehenden Ansprüche, **dadurch gekennzeichnet, dass** anstelle von Füllermineralien Zement verwendet wird.

13. Bauwerk mit zumindest einer Lage aus einer Schaumglas-Gussmasse nach einem der vorhergehenden Ansprüche, wobei eine erkaltete Lage aus Schaumglas-Gussmasse eine mittlere Druckfestigkeit von mehr als 2,0N/mm², vorzugsweise von 2,2N/mm² bis 3,0N/mm² aufweist.

14. Verfahren zur Herstellung einer Schaumglas-Gussmasse bestehend aus einem Bitumen-Bindemittel (24) mit zumindest einem Anteil an Bitumen und Schaumglasschotter (31) aus porösen Schaumglasstücken umfassend folgende Schritte:
- Lagern von heissem Bitumen-Bindemittel (24), das zumindest einen Anteil an Hartbitumen mit einer Penetration zwischen 1 und 25 [0.1 mm] aufweist,
- Lagern von Schaumglasschotter (31) dessen Schaumglasstücke eine Korngrösse von 1-100 mm aufweisen,
- Beschickung einer Mischanlage (26) zumindest mit heissem Bitumen-Bindemittel (24) und Schaumglasschotter (31) gemäss einem vorbestimmten Mengenverhältnis,
- Mischung von Bitumen-Bindemittel (24) und Schaumglasschotter (31) durch langsame Rotation der Mischanlage (26) mit einer Geschwindigkeit von 1-10 Umdrehungen pro Minute derart, dass das Bitumen-Bindemittel (24) zumindest teilweise in ein Hohlraumvolumen der Schaumglasstücke eindringt.

15. Verfahren nach Anspruch 14, **dadurch gekennzeichnet, dass** die Mischanlage (26) mit einer Geschwindigkeit rotiert die zu keiner Kornzertrümmerung führt.

16. Verfahren nach einem der Ansprüche 14 bis 15, **dadurch gekennzeichnet, dass** ein beheizter Gussasphalt-Transportkocher verwendet wird.

17. Verfahren nach einem der Ansprüche 14 bis 16, **dadurch gekennzeichnet, dass** der Schaumglas-Gussmasse Mineralstoffe (1) beigemischt werden, die vor der Beschickung erhitzt werden.

18. Verfahren nach einem der Ansprüche 15 bis 17, **dadurch gekennzeichnet, dass** der Schaumglas-Gussmasse Füllermineralien (21; 22) und / oder Faserstoffe beigemischt werden.

19. Verfahren nach einem der Ansprüche 14 bis 18, **dadurch gekennzeichnet, dass** eine mobile Mischanlage verwendet wird.

20. Verfahren nach einem der Ansprüche 14 bis 19, **dadurch gekennzeichnet, dass** der Mastix aus Bitumen und allfälligen Additiven auf den geschütteten und verdichteten Schaumglas-Schotter im nachhinein als Verfüllmasse und Kleber aufgebracht wird.

21. Verfahren nach einem der Ansprüche 14 bis 20, **dadurch gekennzeichnet, dass** die Schaumglas-Gussmasse mit üblichem Asphalt-Strassenfertiger eingebaut wird.

## Claims

1. A foam glass casting compound for a building structure, which is mixed at least from a bituminous binder (24) having at least a proportion of bitumen and foam glass gravel (31) made of porous foam glass pieces, wherein the foam glass casting compound is malleable in the warm state and is cured in the cooled state, **characterized in that** the foam glass pieces of the foam glass gravel (31) have a grain size of 1-100 mm, and the bituminous binder (24) has at least a proportion of hard bitumen with a penetration between 1 and 25 [0.1 mm], and
the bituminous binder (24) completely envelops the foam glass pieces of the foam glass gravel (31) and at least partially fills a void volume of the foam glass pieces.

2. The foam glass casting compound according to Claim 1, **characterized in that** the bituminous binder (24) at least predominantly fills the void volume of the foam glass pieces.

3. The foam glass casting compound according to Claim 2, **characterized in that** the bituminous binder (24) at least predominantly fills a pore surface of the individual grain of the foam glass pieces.

4. The foam glass casting compound according to one of the preceding claims, **characterized in that** the foam glass pieces of the foam glass gravel (31) have a grain size of 10-70 mm, preferably 10-60 mm.

5. The foam glass casting compound according to one of the preceding claims, **characterized in that** the foam glass gravel (31) includes foam glass pieces of different grain sizes and/or porosities.

6. The foam glass casting compound according to one of the preceding claims, **characterized in that** the bituminous binder (24) is formed as a mastic composed of bitumen, sand, and filler minerals.

7. The foam glass casting compound according to Claim 6, **characterized in that** the mastic includes additives for regulating the capability for penetration into the void volume of the foam glass pieces.

8. The foam glass casting compound according to Claim 6 or 7, **characterized in that** the mastic includes Fischer-Tropsch waxes and/or amide waxes for regulating the viscosity.

9. The foam glass casting compound according to Claim 6 or 7, **characterized in that** the mastic contains polymers or polymer-modified binder for adhesive bonding and/or for regulating the elasticity.

10. The foam glass casting compound according to Claim 9, **characterized in that** polymer bitumen (PmB) such as PE, PP, or PVC, styrene-butadiene-styrene (SBS), polyolefins such as atactic polypropylene (APP), ethylene-vinyl acetate (EVA), ethylene-propylene copolymer, or mixtures thereof are used as polymers or polymer-modified binders.

11. The foam glass casting compound according to one of the preceding claims, **characterized in that** an emulsion-based cold bitumen is used instead of hot bitumen.

12. The foam glass casting compound according to one of the preceding claims, **characterized in that** cement is used instead of filler minerals.

13. A building structure having at least one layer made of a foam glass casting compound according to one of the preceding claims, wherein a cooled layer of foam glass casting compound has an average compressive strength of greater than 2.0 N/mm², preferably 2.2 N/mm² to 3.0 N/mm².

14. A method for manufacturing a foam glass casting compound composed of a bituminous binder (24) having at least a proportion of bitumen and foam glass gravel (31) made of porous foam glass pieces, comprising the following steps:
- storing hot bituminous binder (24) having at least a proportion of hard bitumen with a penetration between 1 and 25 [0.1 mm],
- storing foam glass gravel (31) whose foam glass pieces have a grain size of 1-100 mm,
- charging a mixing unit (26) at least with hot bituminous binder (24) and foam glass gravel (31) according to a predetermined quantity ratio,
- mixing bituminous binder (24) and foam glass gravel (31) by slowly rotating the mixing unit (26) at a speed of 1-10 revolutions per minute, so that the bituminous binder (24) at least partially penetrates into a void volume of the foam glass pieces.

15. The method according to Claim 14, **characterized in that** the mixing unit (26) rotates at a speed that results in no grain pulverization.

16. The method according to one of Claims 14 to 15, **characterized in that** a heated mastic asphalt transport cooker is used.

17. The method according to one of Claims 14 to 16, **characterized in that** minerals (1) that are heated prior to the charging are admixed with the foam glass casting compound.

18. The method according to one of Claims 15 to 17, **characterized in that** filler minerals (21; 22) and/or fibrous materials are admixed with the foam glass casting compound.

19. The method according to one of Claims 14 to 18, **characterized in that** a mobile mixing unit is used.

20. The method according to one of Claims 14 to 19, **characterized in that** the mastic composed of bitumen and possible additives is subsequently applied to the poured and compacted foam glass gravel as a filler compound and an adhesive.

21. The method according to one of Claims 14 to 20, **characterized in that** the foam glass casting compound is incorporated using conventional asphalt pavers.

## Revendications

1. Composé de coulée à base de verre mousse destiné à un ouvrage de construction, lequel composé est un mélange formé au moins à partir d'un liant bitumineux (24) ayant au moins une proportion de bitume et de gravier en verre mousse (31) comportant des morceaux de verre mousse poreux, le composé de coulée à base de verre mousse étant plastique à chaud et durci à l'état refroidi, **caractérisé en ce que** les morceaux de verre mousse du gravier en verre mousse (31) ont une granulométrie de 1 à 100 mm, et le liant bitumineux (24) a au moins une proportion de bitume dur avec une pénétration comprise entre 1 et 25 [0,1 mm], et **en ce que** le liant bitumineux (24) enveloppe complètement les morceaux de verre mousse du gravier en verre mousse (31) et remplit au moins partiellement un volume vide des morceaux de verre mousse.

2. Composé de coulée à base de verre mousse selon la revendication 1, **caractérisé en ce que** le liant bitumineux (24) remplit au moins de manière prédominante le volume vide des morceaux de verre mousse.

3. Composé de coulée à base de verre mousse selon la revendication 2, **caractérisé en ce que** le liant bitumineux (24) remplit au moins de manière prédominante une surface de pores du grain individuel des morceaux de verre mousse.

4. Composé de coulée à base de verre mousse selon l'une des revendications précédentes, **caractérisé en ce que** les morceaux de verre mousse du gravier de verre mousse (31) ont une granulométrie de 10 à 70 mm, de préférence de 10 à 60 mm.

5. Composé de coulée à base de verre mousse selon l'une des revendications précédentes, **caractérisé en ce que** le gravier de verre mousse (31) comprend des morceaux de verre mousse de granulométries et/ou porosités différentes.

6. Composé de coulée à base de verre mousse selon l'une des revendications précédentes, **caractérisé en ce que** le liant bitumineux (24) est réalisé sous la forme d'un mastic comprenant du bitume, du sable et des charges minérales.

7. Composé de coulée à base de verre mousse selon la revendication 6, **caractérisé en ce que** le mastic comprend des additifs destinés à réguler la capacité de pénétration dans le volume vide des morceaux de verre mousse.

8. Composé de coulée à base de verre mousse selon la revendication 6 ou 7, **caractérisé en ce que** le mastic comprend des cires Fischer-Tropsch et/ou des cires amides pour réguler la viscosité.

9. Composé de coulée à base de verre mousse selon la revendication 6 ou 7, **caractérisé en ce que** le mastic contient des polymères ou un liant modifié par polymère destinés au collage et/ou au réglage de l'élasticité.

10. Composé de coulée à base de verre mousse selon la revendication 9, **caractérisé en ce que** les bitumes polymères (PmB) tel que le PE, PP ou PVC, SBS (styrène-butadiène-styrène), les polyoléfines telles que APP (polypropylène atactique), EVA (éthylène-acétate de vinyle), le copolymère éthylène-propylène ou leurs mélanges sont utilisés comme polymères ou liants modifiés par des polymères.

11. Composé de coulée à base de verre mousse selon l'une des revendications précédentes, **caractérisé en ce qu'**un bitume froid à base d'émulsion est utilisé à la place du bitume chaud.

12. Composé de coulée à base de verre mousse selon l'une des revendications précédentes, **caractérisé en ce que** du ciment est utilisé à la place des charges minérales.

13. Ouvrage de construction comprenant au moins une couche d'un composé de coulée à base de verre mousse selon l'une des revendications précédentes, une couche refroidie de composé de coulée à base de verre mousse ayant une résistance moyenne à la compression supérieure à 2,0 N/mm², de préférence de 2,2 N/mm² à 3,0 N/mm².

14. Procédé de fabrication d'un composé de coulée à base de verre mousse comprenant un liant bitumineux (24) ayant au moins une proportion de bitume et du gravier de verre mousse (31) comportant des morceaux de verre mousse poreux, le procédé comprenant les étapes suivantes :
- stocker du liant bitumineux chaud (24) ayant au moins une proportion de bitume dur avec une pénétration comprise entre 1 et 25 [0,1 mm],
- stocker du gravier de verre mousse (31) dont les morceaux de verre mousse ont une granulométrie de 1 à 100 mm,
- charger une unité de mélange (26) au moins avec du liant bitumineux chaud (24) et du gravier de verre mousse (31) dans un rapport en quantité prédéterminé,
- mélanger le liant bitumineux (24) et le gravier de verre mousse (31) par rotation lente de l'unité de mélange (26) à une vitesse de 1 à 10 tours par minute de sorte que le liant bitumineux (24) pénètre au moins partiellement dans le volume vide des morceaux de verre mousse.

15. Procédé selon la revendication 14, **caractérisé en ce que** l'unité de mélange (26) tourne à une vitesse qui n'entraîne aucune pulvérisation des grains.

16. Procédé selon l'une des revendications 14 à 15, **caractérisé en ce que** l'on utilise un cuiseur de transport d'asphalte coulé chauffé.

17. Procédé selon l'une des revendications 14 à 16, **caractérisé en ce que** des minéraux (1) qui sont chauffés avant le chargement sont mélangés avec le composé de coulée de verre mousse.

18. Procédé selon l'une des revendications 15 à 17, **caractérisé en ce que** des minéraux de remplissage (21 ; 22) et/ou des matières fibreuses sont mélangés avec le composé de coulée à base de verre mousse.

19. Procédé selon l'une des revendications 14 à 18, **caractérisé en ce que** l'on utilise une unité de mélange mobile.

20. Procédé selon l'une des revendications 14 à 19, **caractérisé en ce que** le mastic comprenant du bitume et des additifs éventuels est ensuite appliqué en tant que composé de remplissage et adhésif sur le gravier de verre mousse déversé et compacté.

21. Procédé selon l'une des revendications 14 à 20, **caractérisé en ce que** le composé de coulée à base de verre mousse est incorporé à un finisseur d'asphalte classique.
